# FASCICULE DE BREVET EUROPEEN

(11) **EP 1 204 188 B1**
(45) Date de publication et mention de la délivrance du brevet: **14.12.2011**
(21) Numéro de dépôt: 01402794.0
(22) Date de dépôt: 26.10.2001
(51) Int. Cl.: H02J 7/00

(54) **Procédé et dispositif d'alimentation en énergie électrique d'un circuit électronique et d'un organe demandeur de puissance commandé par ce circuit**
Vehrfaren und Vorrichtung zur Stromversorgung einer elektronischen Schaltung und eines von dieser Schaltung steuerenden Leistungsbedarfgerätes
Method and device for supplying electric power to an electronic circuit and to a power demanding device controlled by this circuit

(30) Priorité: 03.11.2000 FR 0014131
(43) Date de publication de la demande: 08.05.2002
(73) Titulaire: ATRAL, F-38190 Crolles (FR)
(72) Inventeur: Morey, Gilles, 38330 Saint Ismier (FR); Arnol, Thierry, 38610 Glières (FR)
(74) Mandataire: Casalonga, Axel

(56) Documents cités:
- US-A- 4 143 283
- US-A- 5 121 046
- US-A- 5 734 205

## Description

La présente invention concerne un procédé et un dispositif d'alimentation d'un circuit électronique et d'alimentation d'un organe demandeur de puissance commandé par ce circuit, avec de l'énergie électrique provenant d'au moins deux sources autonomes telles que des piles.

En particulier dans le cas des systèmes d'alarme pour la protection des personnes et des biens, qui comprennent des composants reliés entre eux par des signaux radioélectriques, il est avantageux que ces composants soient autonomes et alimentés par des piles.

Certains de ces composants comprennent des circuits électroniques peu consommateurs d'énergie électrique mais qui sont adaptés pour commander des organes à consommation relativement importante d'énergie électrique, les circuits électroniques étant alimentés en tout ou en partie continuellement tandis que les organes très consommateurs d'énergie électrique sont commandés peu souvent et pour une durée relativement courte.

C'est le cas en particulier des composants de signalisation d'alarme qui comprennent un circuit électronique de réception et de traitement de signaux radioélectriques et en particulier une sirène d'émission sonore commandée par ce circuit.

Bien qu'il soit connu, en particulier par le brevet US-A-5 121 046, d'utiliser sélectivement des montages en série ou en parallèle de deux piles exclusivement en fonction de l'état de ces piles, de tels montages ne sont cependant pas suffisamment perfectionnés pour être adaptés par exemple aux composants d'un système d'alarme tel que décrit ci-dessus.

Le but de la présente invention est de proposer un procédé et un dispositif d'alimentation qui permettent à la fois d'adapter le couplage des piles non seulement en fonction des demandes en énergie électrique du circuit électronique mais également d'adapter des états ou des modes imposés de fonctionnement de l'organe demandeur de puissance en fonction des modes de couplage des piles.

Dans ce sens, la présente invention a pour objet un procédé d'alimentation selon la revendication 1 haut précité lorsque la tension de chacune des piles est détectée supérieure à leur seuil haut ou à placer l'organe à son état de fonctionnement à son niveau bas précité lorsque la tension d'au moins l'une des piles est détectée inférieure à son seuil haut.

Le procédé selon l'invention peut avantageusement consister à détecter l'état de piles périodiquement en dehors des phases de fonctionnement dudit organe, puis à placer les piles en parallèle ou en série, et consister, à la suite d'un ordre d'enclenchement d'une phase de fonctionnement dudit organe, à détecter l'état de piles, puis à placer les piles en série ou en parallèle et à placer l'organe à son état de fonctionnement à son niveau haut ou à son niveau bas.

La présente invention a également pour objet un dispositif d'alimentation selon la revendication 3.

Selon l'invention, ledit circuit électronique et ledit organe commandable sont de préférence alimentés via des diodes.

Selon l'invention, les moyens délivrant ledit ordre de commande auxdits moyens de pilotage peuvent avantageusement comprendre un récepteur radio.

Selon l'invention, ledit organe peut avantageusement comprendre des moyens de signalisation tels que des moyens sonores ou lumineux.

Selon l'invention, le dispositif peut comprendre en outre des moyens pour délivrer un signal d'état des piles.

Selon l'invention, le dispositif peut comprendre également un émetteur radio permettant d'émettre ledit signal d'état des piles.

La présente invention sera mieux comprise à l'étude d'un dispositif d'alimentation d'un circuit électronique et d'un organe devant être commandé par ce circuit, constituant en particulier un composant de signalisation d'un système d'alarme pour la surveillance des personnes et des biens, décrits à titre d'exemples non limitatifs et illustrés par le dessin sur lequel :
- la figure 1 représente un schéma électronique d'un dispositif selon l'invention ;
- et la figure 2 représente sous forme de diagrammes des modes de fonctionnement de ce dispositif.

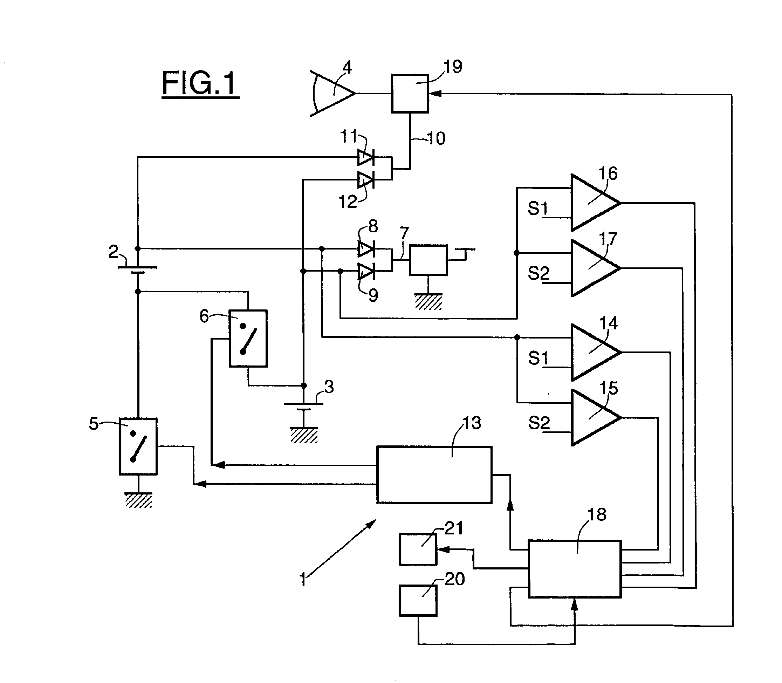

En se reportant à la figure 1, on voit qu'on a représenté un circuit électronique 1 susceptible d'être alimenté en énergie électrique par deux piles 2 et 3 pour fonctionner au moins en partie sans interruption et adapté pour commander l'alimentation par ces piles 2 et 3 d'un organe demandeur de puissance tel qu'une sirène 4 pendant une durée en général déterminée, suite à un ordre de commande.

Le circuit électronique 1 est composé de la manière suivante.

Le pôle (-) de la pile 2 est relié à la masse via un interrupteur commandable 5 et est relié au pôle (+) de la pile 3 via un interrupteur commandable 6, le pôle (-) de la pile 3 étant relié à la masse.

Les pôles (+) des piles 2 et 3 sont reliés d'une part à une ligne 7 d'alimentation des éléments du circuit électronique 1 via respectivement des diodes 8 et 9 et d'autre part à une ligne 10 d'alimentation de la sirène 4 respectivement via des diodes 11 et 12.

Ainsi, lorsque l'interrupteur 5 est commandé pour être placé en position fermée et l'interrupteur 6 est commandé pour être placé en position ouverte, les piles 2 et 3 sont placées en parallèle (MP) d'une part entre la masse et la ligne d'alimentation 7 et d'autre part entre la masse et la ligne d'alimentation 10.

Lorsque l'interrupteur 5 est commandé pour être placé en position ouverte et l'interrupteur 6 est commandé pour être placé en position fermée, les piles 2 et 3 sont branchées en série (MS) d'une part entre la masse et la ligne d'alimentation 7 et d'autre part entre la masse et la ligne d'alimentation 10.

Pour commander sélectivement les interrupteurs 5 et 6 tel qu'il vient d'être décrit, le circuit électronique 1 comprend un circuit de commutation 13.

Par ailleurs, le pôle (+) de la pile 2 est relié d'une part à une entrée d'un comparateur 14 dont l'autre entrée reçoit une valeur de tension correspondant à un seuil haut S1 de tension et d'autre part à une entrée d'un comparateur 15 dont l'autre entrée reçoit une valeur de tension correspondant à un seuil bas S2 de tension.

De la même manière, le pôle (+) de la pile 3 est relié d'une part à une entrée d'un comparateur 16 dont l'autre entrée reçoit une valeur de tension correspondant à un seuil haut S1 de tension et d'autre part à une entrée d'un comparateur 17 dont l'autre entrée reçoit une valeur de tension correspondant à un seuil bas S2 de tension.

Les sorties des comparateurs 14-17 sont reliées à un circuit de pilotage 18 dont une sortie de commande est reliée au circuit de commutation 13 et dont une autre sortie est reliée à l'entrée d'un circuit d'adaptation 19 monté sur la ligne 10 d'alimentation de la sirène 4.

Le circuit d'adaptation 19 est conçu pour que la sirène 4 fonctionne selon deux modes ou états, l'un pour délivrer une puissance sonore forte PSH et l'autre pour délivrer une puissance sonore atténuée PSB.

Le circuit de pilotage 18 présente en outre une entrée qui est reliée à la sortie d'un circuit de détection 20 susceptible de lui délivrer un ordre de commande. Par exemple, le circuit de détection 20 est constitué par un récepteur de signaux radioélectriques susceptibles de détecter un ordre radioélectrique de commande de la sirène 4.

Le circuit de commutation 13 et le circuit de pilotage 18 peuvent être programmés pour fonctionner de la manière suivante.

Premier cas : Le circuit de détection 20 ne délivre pas d'ordre de commande au circuit de pilotage 18.

Le circuit de pilotage interroge ou scrute périodiquement les sorties des comparateurs 14-17.

Selon une première situation, si les comparateurs 14 et 16 délivrent un signal signifiant que la tension aux bornes des piles 2 et 3 est supérieure au seuil haut S1 correspondant, le circuit de pilotage 18 commande le circuit de commutation 13 qui commande les interrupteurs 5 et 6 de façon à placer ou maintenir les piles 2 et 3 en parallèle (MP) comme décrit précédemment.

Selon une deuxième situation, si les comparateurs précités délivrent des signaux signifiant qu'au moins la tension aux bornes de l'une des piles 2 et 3 est comprise entre son seuil haut S1 et son seuil bas S2 correspondants et si les comparateurs précités délivrent des signaux signifiant que la tension aux bornes de l'autre pile est supérieure à son seuil bas S2 correspondant, le circuit de pilotage 18 commande le circuit de commutation 13 de façon à placer ou maintenir les interrupteurs 5 et 6 dans leur position correspondant au montage en série (MS) des piles 2 et 3 tel que décrit précédemment.

Selon une troisième situation, si le comparateur 15 délivre un signal signifiant que la tension de la pile 2 est inférieure au seuil bas S2 correspondant ou si le comparateur 17 délivre un signal signifiant que la tension aux bornes de la pile 3 est inférieure au seuil bas S2 correspondant, le circuit de pilotage 18 commande le circuit de commutation 13 de façon à placer ou maintenir les interrupteurs 5 et 6 dans leur position correspondant au montage en parallèle (MP) des piles 2 et 3 tel que décrit précédemment.

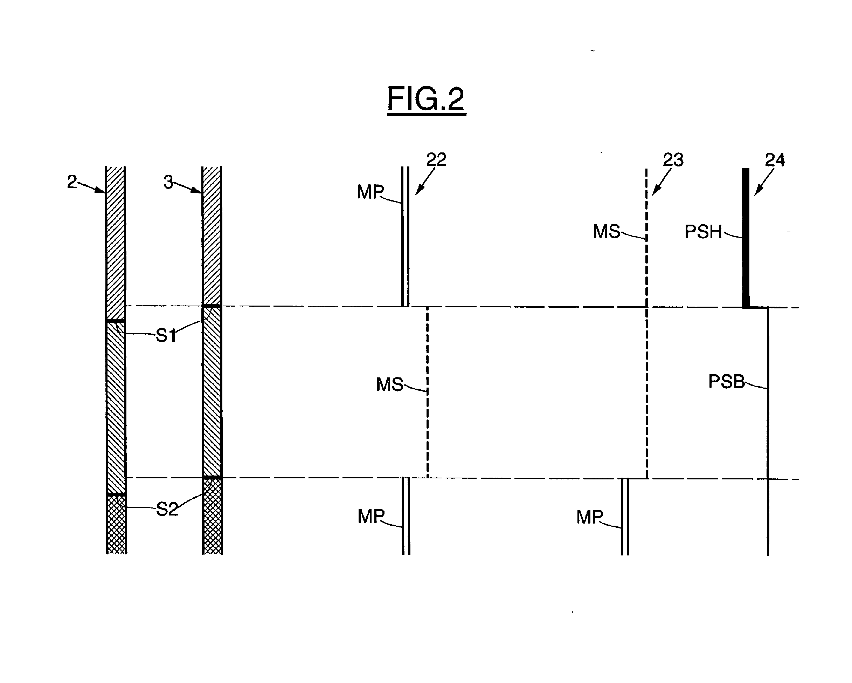

Dans les situations qui viennent d'être décrites, qui sont illustrées par le diagramme 22 de la figure 2, le montage des piles 2 et 3 choisi par le circuit de pilotage 18 à la suite d'une phase de scrutation des sorties des comparateurs 14-17 est maintenu jusqu'à la phase de scrutation suivante.

Second cas : Le circuit de détection 20 délivre un ordre de commande au circuit de pilotage 18.

Immédiatement, le circuit de pilotage 18 scrute les sorties des comparateurs 14-17.

Si les deux comparateurs 14 et 16 délivrent des signaux signifiant que la tension aux bornes des piles 2 et 3 est supérieure à leur seuil haut S1 correspondant, le circuit de pilotage 18 commande le circuit de commutation 13 de façon à placer ou maintenir les interrupteurs 5 et 6 dans leur position correspondant au montage en série (MS) des piles 2 et 3 tel que décrit précédemment, et non au montage en parallèle de la première situation mentionnée plus haut.

En même temps, le circuit de pilotage 18 commande le circuit d'adaptation 19 de façon à placer la sirène 4 à son mode de fonctionnement à un niveau de puissance haut (PSH).

Dans la mesure où les deuxième et troisième situations décrites plus haut se produisent, le circuit de pilotage 18 commande le circuit de commutation 13 de façon à placer ou maintenir les interrupteurs 5 et 6 comme indiqué dans la description du premier cas.

En même temps, le circuit de pilotage 18 commande le circuit d'adaptation 19 de façon à placer la sirène 4 sur son mode ou état de fonctionnement atténué (PSB).

Les deux situations ci-dessus de branchement des piles sont illustrées par le diagramme 23 et les deux modes de fonctionnement ci-dessus de la sirène 4 sont illustrés par le diagramme 24 de la figure 2.

Par ailleurs, le circuit de pilotage 18 présente une sortie reliée à un circuit d'émission 21 par exemple un émetteur de signaux radioélectriques, de façon à délivrer des signaux correspondant aux états de piles 2 et 3 qui lui sont délivrés par les comparateurs 14-17.

Il résulte de ce qui précède que le circuit électronique 1 permet de choisir les montages en série et en parallèle des piles 2 et 3 de façon à pouvoir bénéficier le plus longtemps possible de leur capacité à délivrer du courant aux éléments du circuit électronique 1 lui-même, les organes constitués par la sirène 4 et à l'émetteur 21, tout en protégeant ces piles l'une par rapport à l'autre.

Dans un mode d'exécution particulier, les seuils précités peuvent être choisis de la manière suivante.

Si les tensions des piles 2 et 3 sont inférieures aux seuils hauts S1 correspondants, les piles 2 et 3 sont considérées comme partiellement ou presque usées.

Si les tensions des piles 2 et 3 sont inférieures aux seuils bas S2 correspondants, les piles 2 et 3 sont considérées comme hors service ou vidées de leur capacité.

La présente invention ne se limite pas à l'exemple ci-dessus décrit. Des variantes de réalisation sont possibles sans sortir du cadre défini par les revendications annexées.

## Revendications

1. Procédé d'alimentation d'un circuit électronique et d'alimentation d'un organe demandeur de puissance commandé par ce circuit, avec de l'énergie électrique provenant d'au moins deux piles comprises dans le dispositif d'alimentation, ledit circuit électronique comprenant des moyens de commutation des piles et des interrupteurs adaptés pour placer ces piles en parallèle ou en série, ledit organe et des interrupteurs étant soumis à des phases de fonctionnement commandées, le procédé consistant
- à fixer, pour chaque pile (2, 3), un seuil haut (S1) et un seuil bas (S2) de tension déterminant un premier état lorsque la tension est supérieure au seuil haut, un second état lorsque la tension est comprise entre le seuil haut et le seuil bas et un troisième état lorsque la tension est inférieure au seuil bas ;
- à détecter la tension des piles et à comparer ces tensions auxdits seuils ; **caractérisé par le fait que** le procédé consiste en plus :
- à fixer au moins deux états de fonctionnement dudit organe (4) dans lesquels cet organe est susceptible de générer au moins un niveau haut (PSH) et un niveau bas (PSB) de puissance ;
qu'il consiste, en dehors des phases de fonctionnement dudit organe (4) :
- à placer les piles en parallèle (MP) lorsque la tension des piles est détectée supérieure à leur seuil haut ou lorsque la tension de l'une des piles est détectée inférieure à son seuil bas ;
- et à placer les piles en série (MS) lorsque la tension aux bornes de l'une des piles est comprise entre son seuil haut (S1) et son seuil bas (S2) correspondants et que la tension aux bornes de l'autre pile est supérieure à son seuil bas (S2) correspondant ;
et qu'il consiste, pendant les phases de fonctionnement dudit organe (4) :
- à placer les piles en série (MS) si la tension de chacune des piles est détectée supérieure à son seuil bas (S2) ou à placer les piles en parallèle (MP) lorsque la tension de l'une des piles est inférieure à son seuil bas (S2) ;
- et à placer l'organe (4) à son état de fonctionnement à son niveau haut précité (PSH) lorsque la tension de chacune des piles est détectée supérieure à leur seuil haut (S1) ou à placer l'organe à son état de fonctionnement à son niveau bas précité (PSB) lorsque la tension d'au moins l'une des piles est détectée inférieure à son seuil haut (S1).

2. Procédé selon la revendication 1, **caractérisé par le fait qu'**il consiste à détecter l'état de piles périodiquement en dehors des phases de fonctionnement dudit organe (4), et qu'il consiste, à la suite d'un ordre de commande d'une phase de fonctionnement dudit organe (4), à détecter l'état de piles et à commander ledit organe.

3. Dispositif d'alimentation d'un circuit électronique (1) et d'alimentation d'un organe (4) demandeur de puissance commandable par ce circuit, avec de l'énergie électrique provenant d'au moins deux piles (2, 3), ledit dispositif d'alimentation comprenant lesdites au moins deux piles (2, 3), des interrupteurs (5, 6) et des moyens de commutation (13) des piles adaptés pour réaliser un montage en série ou un montage en parallèle des piles afin d'alimenter ledit circuit électronique et ledit organe commandable, ledit organe étant soumis à des phases de fonctionnement commandées, le dispositif d'alimentation comprenant ledit circuit électronique (1) qui comprend toutes les moyens pour la mise en oeuvre du procédé selon l'une quelconque des revendications précédentes entre lesquels :
- lesdits moyens de commutation (13) ;
- des moyens d'adaptation (19) pour faire fonctionner ledit organe commandable selon au moins lesdits états de fonctionnement dans lesquels cet organe est susceptible de demander au moins ledit niveau haut (PSH) et ledit niveau bas de puissance (PSB) ;
- des moyens de comparaison (14-17) pour comparer la tension des piles respectivement audit seuil haut (S1) et audit seuil bas (S2) de tension ;
- et des moyens de pilotage (18) reliés auxdits moyens de comparaison (14-17) et susceptibles de recevoir un ordre de commande (20) d'activation de l'organe demandeur de puissance, ces moyens de pilotage étant adaptés pour commander sélectivement lesdits moyens de commutation (13) et lesdits moyens d'adaptation (19) en fonction de la présence ou non dudit ordre de commande.

4. Dispositif selon la revendication 3, **caractérisé par le fait que** ledit circuit électronique et ledit organe commandable sont alimentés via des diodes (8, 9, 11, 12).

5. Dispositif selon l'une des revendications 3 et 4, **caractérisé par le fait que** les moyens délivrant ledit ordre de commande auxdits moyens de pilotage (18)) comprennent un récepteur radio (20).

6. Dispositif selon l'une quelconque des revendications 3 à 5, **caractérisé par le fait que** ledit organe (4) comprend des moyens de signalisation tels que des moyens sonores ou lumineux.

7. Dispositif selon l'une quelconque des revendications 3 à 6, **caractérisé par le fait qu'**il comprend des moyens (21) pour délivrer un signal d'état des piles.

8. Dispositif selon la revendication 7, **caractérisé par le fait qu'**il comprend un émetteur radio (21) permettant d'émettre ledit signal d'état des piles.

## Claims

1. Process for supplying an electronic circuit and for supplying a power-demanding facility controlled by this circuit, with electrical energy originating from at least two batteries included in the supply device, the said electronic circuit comprising battery switching means and breakers adapted to place these batteries in parallel or in series, the said facility being subjected to controlled operating phases, the process consisting
- in fixing, for each battery (2, 3), a high threshold (S1) and a low threshold (S2) of voltage determining a first state when the voltage is above the high threshold, a second state when the voltage lies between the high threshold and the low threshold and a third state when the voltage is below the low threshold;
- in detecting the voltage of the batteries and in comparing these voltages with the said thresholds; **characterized in that** the process furthermore consists:
- in fixing at least two operating states of the said facility (4) wherein this facility is capable of generating at least one high level (PSH) and one low level (PSB) of power;
- that it consists, outside of the operating phases of the said facility (4):
- in placing the batteries in parallel (MP) when the voltage of the batteries is detected to be above their high threshold or when the voltage of one of the batteries is detected to be below its low threshold;
- and in placing the batteries in series (MS) when the voltage across the terminals of one of the batteries lies between its corresponding high (S1) and low (S2) thresholds and when the voltage across the terminals of the other battery is above its corresponding low threshold (S2);
- and that it consists, during the operating phases of the said facility:
- in placing the batteries in series (MS) if the voltage of each of the batteries is detected to be above its low threshold (S2) or in placing the batteries in parallel (MP) when the voltage of one of the batteries is below its low threshold (S2);
- and in placing the facility (4) in its operating state at its aforesaid high level (PSH) when the voltage of each of the batteries is detected to be above their high threshold (S1) or in placing the facility in its operating state at its aforesaid low level (PSB) when the voltage of at least one of the batteries is detected to be below its high threshold (S1).

2. Process according to Claim 1, **characterized in that** it consists in detecting the state of the batteries periodically outside of the operating phases of the said facility (4), and that it consists, following a control command for an operating phase of the said facility (4), in detecting the state of the batteries and in controlling the said facility.

3. Device for supplying an electronic circuit (1) and for supplying a power-demanding facility (4) controllable by this circuit, with electrical energy originating from at least two batteries (2, 3), the said supply device comprising the said at least two batteries (2, 3), breakers (5, 6) and battery switching means (13) adapted to produce a series arrangement or a parallel arrangement of the batteries so as to supply the said electronic circuit and the said controllable facility, the said facility being subjected to controlled operating phases, the supply device comprising the said electronic circuit (1) which comprises all the means for the implementation of the process according to any one of the preceding claims, which means include:
- the said switching means (13);
- means of adaptation (19) for operating the said controllable facility according to at least the said operating states in which this facility is capable of demanding at least the said high level (PSH) and the said low level of power (PSB);
- means of comparison (14-17) for comparing the voltage of the batteries respectively with the said high threshold (S1) and with the said low threshold (S2) of voltage;
- and drive means (18) linked to the said means of comparison (14-17) and capable of receiving a control command (20) for activating the power-demanding facility, these drive means being adapted so as to selectively control the said switching means (13) and the said means of adaptation (19) as a function of the presence or absence of the said control command.

4. Process according to Claim 3, **characterized in that** the said electronic circuit and the said controllable facility are supplied via diodes (8, 9, 11, 12).

5. Device according to one of Claims 3 and 4, **characterized in that** the means delivering the said control command to the said drive means (18) comprise a radio receiver (20).

6. Device according to any one of Claims 3 to 5, **characterized in that** the said facility (4) comprises signalling means such as sound means or luminous means.

7. Device according to any one of Claims 3 to 6, **characterized in that** it comprises means (21) for delivering a battery state signal.

8. Device according to Claim 7, **characterized in that** it comprises a radio transmitter (21) making it possible to transmit the said battery state signal.

## Patentansprüche

1. Verfahren zur Speisung einer elektronischen Schaltung und zur Speisung eines von dieser Schaltung gesteuerten, Leistung anfordernden Organs mit elektrischer Energie, die von mindestens zwei Batterien kommt, welche in der Speisevorrichtung enthalten sind, wobei die elektronische Schaltung Schalteinrichtungen der Batterien und Unterbrecher enthält, die geeignet sind, um diese Batterien parallel oder in Reihe zu schalten, wobei das Organ gesteuerten Betriebsphasen ausgesetzt ist, wobei das Verfahren darin besteht,
- für jede Batterie (2, 3) eine hohe (S1) und eine niedrige Spannungsschwelle (S2) festzulegen, die einen ersten Zustand, wenn die Spannung höher als die hohe Schwelle ist, einen zweiten Zustand, wenn die Spannung zwischen der hohen Schwelle und der niedrigen Schwelle liegt, und einen dritten Zustand bestimmen, wenn die Spannung niedriger als die niedrige Schwelle ist;
- die Spannung der Batterien zu erfassen und diese Spannungen mit den Schwellen zu vergleichen;
**dadurch gekennzeichnet, dass** das Verfahren außerdem darin besteht:
- mindestens zwei Betriebszustände des Organs (4) festzulegen, in denen dieses Organ mindestens einen hohen (PSH) und einen niedrigen Leistungspegel (PSB) erzeugen kann;
dass es außerhalb der Betriebsphasen des Organs (4) darin besteht:
- die Batterien parallel zu schalten (MP), wenn die Spannung der Batterien höher als ihre hohe Schwelle erfasst wird, oder wenn die Spannung einer der Batterien niedriger als ihre niedrige Schwelle erfasst wird;
- und die Batterien in Reihe zu schalten (MS), wenn die Spannung an den Klemmen einer der Batterien zwischen ihrer entsprechenden hohen Schwelle (S1) und niedrigen Schwelle (S2) liegt, und die Spannung an den Klemmen der anderen Batterie höher als ihre entsprechende niedrige Schwelle (S2) ist;
und dass es während der Betriebsphasen des Organs (4) darin besteht:
- die Batterien in Reihe zu schalten (MS), wenn die Spannung jeder der Batterien höher als ihre niedrige Schwelle (S2) erfasst wird, oder die Batterien parallel zu schalten (MP), wenn die Spannung einer der Batterien niedriger als ihre niedrige Schwelle (S2) ist;
- und das Organ (4) in seinen Betriebszustand auf seinem erwähnten hohen Pegel (PSH) zu bringen, wenn die Spannung jeder der Batterien höher als ihre hohe Schwelle (S1) erfasst wird, oder das Organ in seinen Betriebszustand auf seinem erwähnten niedrigen Pegel (PSB) zu bringen, wenn die Spannung mindestens einer der Batterien niedriger als ihre hohe Schwelle (S1) erfasst wird.

2. Verfahren nach Anspruch 1, **dadurch gekennzeichnet, dass** es darin besteht, den Zustand von Batterien periodisch außerhalb der Betriebsphasen des Organs (4) zu erfassen, und dass es nach einem Steuerbefehl einer Betriebsphase des Organs (4) darin besteht, den Zustand von Batterien zu erfassen und das Organ zu steuern.

3. Vorrichtung zur Speisung einer elektronischen Schaltung (1) und zur Speisung eines Leistung anfordernden Organs (4), das von dieser Schaltung steuerbar ist, mit von mindestens zwei Batterien (2, 3) stammender elektrischer Energie, wobei die Speisevorrichtung die mindestens zwei Batterien (2, 3), Unterbrecher (5, 6) und Schalteinrichtungen (13) der Batterien enthält, die geeignet sind, um eine Reihenschaltung oder eine Parallelschaltung der Batterien durchzuführen, um die elektronische Schaltung und das steuerbare Organ zu speisen, wobei das Organ gesteuerten Betriebsphasen ausgesetzt ist, wobei die Speisevorrichtung die elektronische Schaltung (1) enthält, die alle Einrichtungen zur Durchführung des Verfahrens nach einem der vorhergehenden Ansprüche enthält, darunter:
- die Schalteinrichtungen (13);
- Anpassungseinrichtungen (19), um das steuerbare Organ gemäß mindestens den Betriebszuständen arbeiten zu lassen, in denen dieses Organ mindestens den hohen Leistungspegel (PSH) und den niedrigen Leistungspegel (PSB) anfordern kann;
- Vergleichseinrichtungen (14-17), um die Spannung der Batterien mit der hohen Spannungsschwelle (S1) bzw. mit der niedrigen Spannungsschwelle (S2) zu vergleichen;
- und Steuereinrichtungen (18), die mit den Vergleichseinrichtungen (14-17) verbunden sind und einen Steuerbefehl (20) zur Aktivierung des Leistung anfordernden Organs empfangen können, wobei diese Steuereinrichtungen geeignet sind, um selektiv die Schalteinrichtungen (13) und die Anpassungseinrichtungen (19) abhängig vom Vorhandensein oder nicht des Steuerbefehls zu steuern.

4. Vorrichtung nach Anspruch 3, **dadurch gekennzeichnet, dass** die elektronische Schaltung und das steuerbare Organ über Dioden (8, 9, 11, 12) gespeist werden.

5. Vorrichtung nach einem der Ansprüche 3 und 4, **dadurch gekennzeichnet, dass** die Einrichtungen, die den Steuerbefehl an die Steuereinrichtungen (18) liefern, einen Funkempfänger (20) enthalten.

6. Vorrichtung nach einem der Ansprüche 3 bis 5, **dadurch gekennzeichnet, dass** das Organ (4) Signalisierungseinrichtungen wie akustische oder leuchtende Einrichtungen enthält.

7. Vorrichtung nach einem der Ansprüche 3 bis 6, **dadurch gekennzeichnet, dass** sie Einrichtungen (21) enthält, um ein Zustandssignal der Batterien zu liefern.

8. Vorrichtung nach Anspruch 7, **dadurch gekennzeichnet, dass** sie einen Funksender (21) enthält, der es ermöglicht, das Zustandssignal der Batterien zu senden.
